# EUROPEAN PATENT APPLICATION

(11) **EP 2 187 636 A1**
(43) Date of publication of application: **19.05.2010**
(21) Application number: 09719912.9
(22) Date of filing: 28.02.2009
(51) Int. Cl.: H04N 7/173

(54) **DIGITAL TELEVISION PROGRAM SUBSCRIBING AND PLAYING METHOD, SET TOP BOX DEVICE AND PLAYING SYSTEM**

(30) Priority: 11.03.2008 CN 200810026761
(71) Applicant: Huawei Device Co., Ltd., Longgang District Shenzhen Guangdong 518129 (CN)
(72) Inventor: KUANG, Longling, Shenzhen Guangdong518129 (CN)
(74) Representative: Pfenning, Meinig & Partner GbR
(86) International application number: PCT/CN2009/070593
(87) International publication number: WO 2009/111962

(57) **Abstract**

A method for reserving and playing digital television (DTV) programs, a set top box, and a DTV playing system are provided in the embodiments of the present invention. The method comprises: displaying a prompt indicating multiple DTV programs to be played at the same time to the subscriber when or before the time of playing the reserved DTV programs meets, and playing one DTV program that is selected by the subscriber from the multiple reserved DTV programs when the time of playing the reserved DTV program meets. The present invention enables subscribers to reserve multiple programs to be played at the same time, and select one program to be played before the playing time of the reserved program.

## Description

### FIELD OF THE INVENTION

This invention relates to the communications field, and in particular, to a method for reserving and playing digital television programs, a set top box, and a playing system thereof.

### BACKGROUND

The increasingly popular digital television (DTV) has attracted more and more subscribers to use the set top box (STB). Compared with the analog television, the DTV can provide more services through the STB, for example, subscribers are enabled to reserve programs through the DTV program guide.

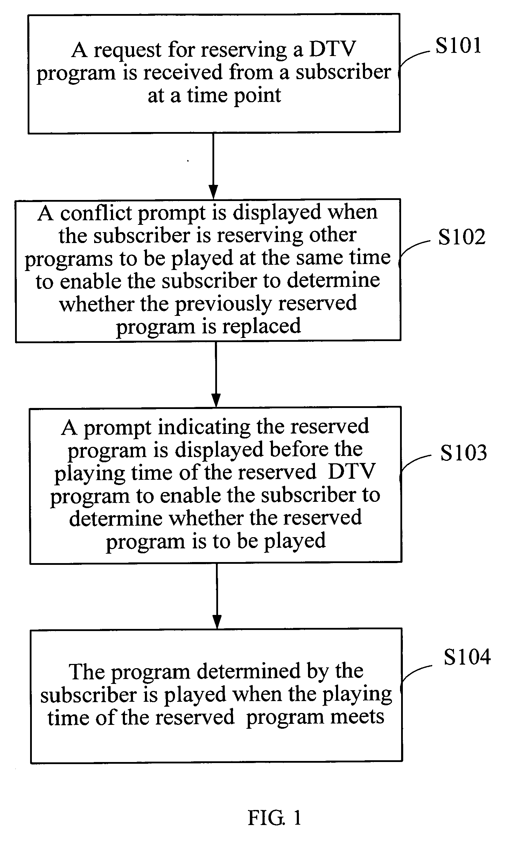

FIG. 1 shows a flowchart of a method for reserving and playing DTV programs in the prior art. Specifically, the method for reserving and playing DTV programs comprises the following steps:
Step S101: A request for reserving a DTV program is received from a subscriber at a time point.
Step S102: A conflict prompt is displayed when the subscriber reserves other DTV programs to be played at the same time as the DTV program reserved previously, prompting the subscriber to determine whether the program reserved previously is replaced.
Step S103: A prompt indicating the reserved DTV program will be displayed before the time of playing the reserved DTV program meets. This prompt enables subscribers to determine whether the reserved DTV program is to be played.
Step S104: The DTV program determined by the user is played when the time of playing the reserved DTV program meets.

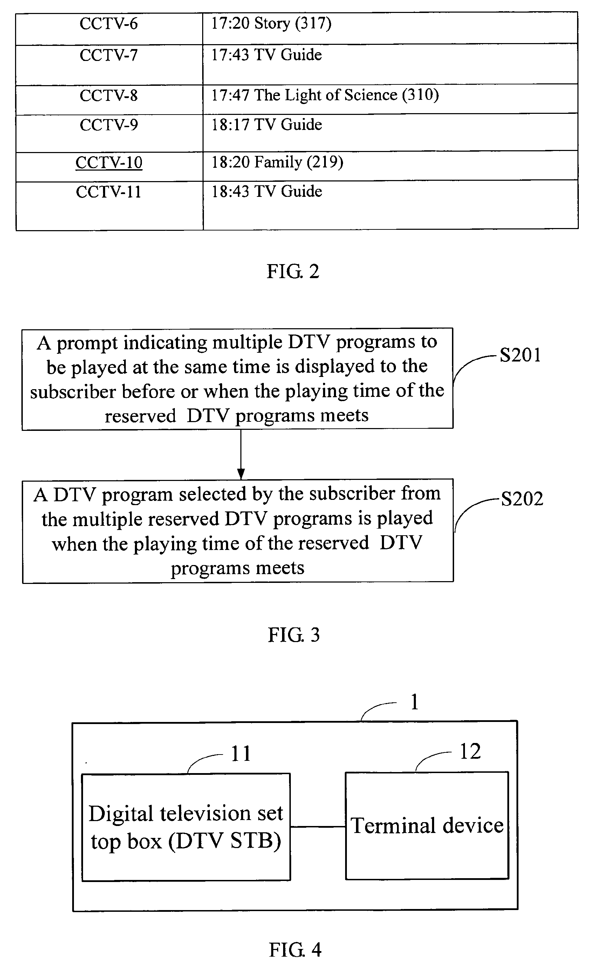

FIG. 2 shows an interface for reserving programs in the prior art. The channel list is displayed on the left, and the electronic program guide for the channels of the selected programs from the channel list is displayed on the right. As shown in FIG. 2, for example, CCTV-10 is selected, and its program guide is listed on the right. Subscribers can switch between the channel list and the electronic program guide, and reserve the desired programs by pressing the functional keys on a controlling device to react to the prompts displayed on the electronic program guide.

The prior art as described above enables a subscriber to reserve only one program at a time. If a subscriber has multiple desired programs which are played at the same time, a conflict prompt is displayed each time when the subscriber reserves another program except the program selected for the first time. Eventually, only one program can be reserved. If the subscriber is unsatisfied with the currently reserved program, the subscriber has to find the previous channel of the reserved program and make a new reservation.

The prior art has the following problems:
In the case of numerous channels, program reservation is complicated and imperfect and operation is inconvenient. For example, family members may reserve programs at different time and they have different choices. Therefore, the members are faced with troubles if their desired programs are to be played at the same time. Whether to replace the previous reserved programs remains a pending problem. Thus, the prior art cannot enable multiple subscribers to reserve multiple concurrent programs through one DTV STB.

### SUMMARY

The technical problem to be solved by the embodiments of the present invention is to provide a method for reserving and playing DTV programs, an STB, and a DTV playing system to enable subscribers to reserve multiple programs to be played at the same time and select one program for playing before the playing time.

To solve the technical problem, a method for reserving and playing DTV programs is provided in the embodiments of the present invention. The method includes:
displaying a prompt indicating multiple DTV programs to be played at the same time to the subscriber before or when the time of playing the reserved DTV programs meets; and
playing the DTV program that is selected by the subscriber from the multiple DTV programs when the time of playing the reserved DTV programs meets.

Further, an STB is provided in the embodiments of the present invention. The STB includes a program reserving unit, where the program reserving unit includes:
a receiving module, adapted to: receive a request for reserving DTV programs from a subscriber;
a prompt displaying module, adapted to: display a prompt indicating multiple DTV programs to be played at the same time to the subscriber before or when the time of playing the reserved DTV programs received by the receiving module meets; and
a playing module, adapted to: play the DTV program that is selected by the subscriber from the multiple DTV programs according to the prompt displayed by the prompt displaying module when the time of playing the reserved DTV programs meets.

A DTV playing system is further provided in the embodiments of the present invention. The DTV playing system includes:
a terminal device, adapted to: play DTV programs; and
a DTV STB, adapted to: control the terminal device to play the DTV programs, where the DTV STB includes a program reserving unit, and the program reserving unit includes:
a receiving module, adapted to: receive a request for reserving DTV programs from a subscriber;
a prompt displaying module, adapted to: display the prompt indicating multiple DTV programs to be played at the same time to the subscriber before or when the time of playing the reserved DTV programs received by the receiving module meets; and
a playing module, adapted to: play one DTV program that is selected by the subscriber from the multiple DTV programs according to the prompt displayed by the prompt displaying module when the time of playing the reserved DTV programs meets.

The present invention enables subscribers to reserve multiple programs to be played at the same time, and then select one program for playing before the playing time of the reserved programs. Therefore, subscribers need to select a program to be played before the playing time, without repeated selection, thus optimizing and perfecting the reservation process. Moreover, the present invention enables multiple subscribers to reserve their desired programs to be played at the same time, and before the playing time of reserved programs, the current subscribers can select their desired programs for playing. Therefore, multiple subscribers can reserve programs.

### BRIEF DESCRIPTION OF THE DRAWINGS

To further detail the embodiments of the present invention or the technical solution in the prior art, accompanying drawings for the embodiments of the present invention or the technical solution of the prior art are described below. It is apparent that these drawings are only for some embodiments of the present invention, and those skilled in the art can obtain other drawings based on these drawings without creative work.
FIG. 1 shows a flowchart of a method for reserving and playing DTV programs in the prior art;
FIG. 2 shows an interface for reserving programs in the prior art;
FIG. 3 shows a flow chart of a method for reserving and playing D TV programs in an embodiment of the present invention;
FIG. 4 shows a structure of a DTV playing system in an embodiment of the present invention;
FIG. 5 shows a structure of an STB applicable to the DTV playing system shown in FIG. 4 in the embodiment of the present invention;
FIG. 6 shows a structure of a playing module in an STB of a DTV playing system in an embodiment of the present invention; and
FIG. 7 shows a structure of a receiving module for reserving DTV programs in an STB of a DTV playing system in an embodiment of the present invention.

### DETAILED DESCRIPTION OF THE EMBODIMENTS

The preferred embodiments of the present invention are elaborated with reference to the accompanying drawings below. In the accompanying drawings, the same or similar components from different figures are marked by the same drawing reference signs.

FIG. 3 shows a flowchart of a method for reserving and playing DTV programs in the embodiment of the present invention. Specifically, the method for reserving and playing DTV programs provided in the embodiments of the present invention comprises the following steps:
Step S201: A prompt indicating multiple DTV programs to be played at the same time is displayed to a subscriber before or when the time of playing the reserved DTV programs meets. In actual implementation, the DTV programs can be displayed to subscribers in a form, for example, a program list.
Step S202: A DTV program selected by the subscriber from the multiple reserved DTV programs is played when the time of playing the reserved DTV programs meets.

It is noted that in the actual situation, subscribers may reserve one or more DTV programs to be played at the same time. Therefore, before the prompt is displayed to the subscribers, indicating multiple DTV programs to be played at the same time, the method provided in this embodiment further comprises:
checking the number of reserved DTV programs to be played at the same time; if the result shows that only one DTV program is reserved, playing this DTV program by default when the time of playing the reserved DTV program meets; if the result shows that more than one DTV programs are reserved, displaying a prompt indicating the multiple DTV programs to the subscriber before or when the time of playing the reserved DTV program meets.

In addition, when subscribers reserve DTV programs and if the number of reserved DTV programs to be played at the same time exceeds the preset reservation limit, a conflict prompt or a program list is displayed to inform the subscribers of the reserved DTV programs to be played at the same time. Therefore, subscribers are enabled to determine whether to replace a reserved program in the list, thus keeping the number of reserved DTV programs to be played at the same time within the limit.

The preceding embodiment of the present invention enables subscribers to reserve multiple programs to be played at the same time, and then select one program for playing before or when the time of playing the reserved DTV programs meets, for example, subscribers can select the program to be played at a time point. Therefore, this invention helps avoid the trouble of repeated selection by subscribers, thus simplifying the reservation process. Moreover, this invention enables multiple subscribers to reserve their desired programs to be played at the same time, and before or when the playing time of reserved programs meets, the current subscribers can select their desired programs for playing. Therefore, multiple subscribers can reserve programs.

FIG. 4 shows a structure of a DTV playing system in the embodiment of the present invention.

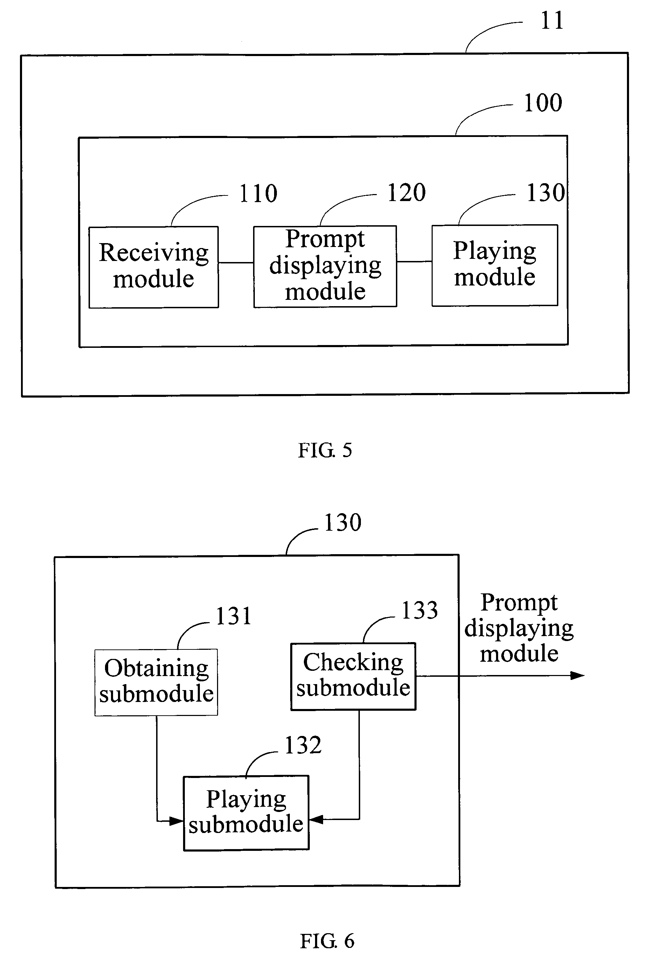

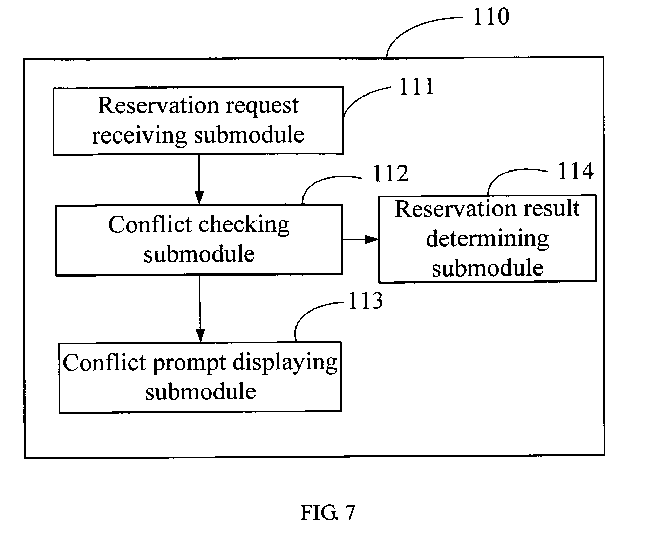

The DTV playing system 1 provided in the present invention includes:
a terminal device 12, adapted to: play DTV programs; and
a DTV STB 11, adapted to: control the terminal device 12 to play the DTV programs. In addition, FIG. 5 shows a structure of a DTV STB applicable to the DTV playing system in the embodiment of the present invention, where the DTV STB includes a program reserving unit 100. The program reserving unit 100 includes:
a receiving module 110 (with the structure shown in FIG. 7), adapted to: receive the request for reserving DTV programs from a subscriber;
a prompt displaying module 120, adapted to: display the prompt indicating multiple DTV programs to be played at the same time to the subscriber before or when the time of playing the reserved DTV programs meets; and
a playing module 130 (see FIG.6), adapted to: play one DTV program selected by the subscriber from the multiple DTV programs when the time of playing the reserved DTV programs meets.

FIG. 6 shows a structure of a playing module in an STB of a DTV playing system in an embodiment of the present invention.

In this embodiment, the playing module 130 in the STB 11 is a functional module of the program reserving unit 100, and includes:
an obtaining submodule 131, adapted to: obtain information about a DTV program selected from multiple reserved DTV programs by subscribers; and
a playing submodule 132, adapted to: play the corresponding DTV program according to the information obtained by the obtaining submodule 131 about the DTV program selected from the multiple reserved DTV programs by subscribers.

In addition, in actual implementation, subscribers may reserve only one DTV program. Therefore, no prompt needs to be displayed to subscribers. Thus, the playing module 130 provided in the present embodiment further includes:
a checking submodule 133, adapted to: check the number of reserved DTV programs to be played at the same time; if the result shows that only one DTV program is reserved, instruct the playing submodule 132 to directly play this reserved DTV program by default when the time of playing the reserved DTV program m eets; if the result shows that more than one DTV programs are reserved, instruct the prompt displaying module 120 to display a prompt indicating the reserved DTV programs to be played at the same time to the subscribers when or before the time of playing the reserved DTV programs.

FIG. 7 shows a structure of a receiving module for reserving DTV programs in an STB of a DTV playing system in an embodiment of the present invention.

In this embodiment, the receiving module 110 in the STB is a functional module of the program reserving unit 100, and includes:
a reservation request receiving submodule 111, adapted to: receive requests for reserving DTV programs from subscribers;
a conflict checking submodule 112, adapted to: check whether the number of reserved DTV programs to be played at the same time received by the reservation request receiving submodule 111 exceeds the reservation limit;
a conflict prompt displaying submodule 113, adapted to: display the conflict prompt to subscribers if the conflict checking submodule 112 has detected that the number of reserved DTV programs to be played at the same time exceeds the reservation limit; and
a reservation result determining submodule 114, adapted to: determine the reserved DTV programs to be played at the same time according to subscriber's operation after the conflict checking submodule 112 has detected that the number of reserved DTV programs to be played at the same time does not exceed the reservation limit.

According to the preceding embodiments of the present invention, the receiving module 110 can receive requests for reserving multiple programs to be played at the same time from the subscribers. When or before the playing time meets, the prompt displaying module 120 displays a prompt to enable the subscribers to select one program for playing. Therefore, the subscribers have no need to make repeated selection, thereby simplifying the reservation process. Moreover, this invention enables multiple subscribers to reserve their desired programs to be played at the same time, and before or when the playing time of reserved programs meets, the current subscribers can select their desired programs for playing. Therefore, multiple subscribers can reserve programs.

The reservation process is elaborated hereinafter.

For example, subscribers can reserve programs through the TV guide interface. Assume that a subscriber has reserved the following programs at 18:00, May 19, 2007:

| | |
|---|---|
| CCTV-1 | 19:00 May 20, 2007 News Broadcast |
| CCTV-5 | 19:30 May 20, 2007 5^{th} Track |
| Shenzhen TV Sports and Health Channel | 19:30 May 20, 2007 Live Broadcast |
| Phoenix Chinese Channel | 19:00 May 20, 2007 International News |
| HBO | 20:00 May 20, 2007 Spiderman III |

The receiving module 110 receives all the requests for reserving these DTV programs, and the conflict prompt displaying submodule 113 does not display the conflict prompt. Under certain circumstance, the conflict prompt displaying submodule 113 displays the conflict prompt to the subscribers if the number of reserved DTV programs to be played at the same time exceeds the reservation limit. In this embodiment, it is assumed that the number of reserved DTV programs to be played at the same time is within the reservation limit.

When it is 18:00, May 20, 2007 , the subscriber can view the following programs through the reservation management interface..

| | |
|---|---|
| CCTV-1 | 19:00 May 20, 2007 News Broadcast |
| Phoenix Chinese Channel | 19:00 May 20, 2007 International News |
| CCTV-5 | 19:30 May 20, 2007 5^{th} Track |
| Shenzhen TV Sports and Health Channel | 19:30 May 20, 2007 Live Broadcast |
| HBO | 20:00 May 20, 2007 Spiderman III |

In other words, after all the DTV programs are reserved, the subscriber can view these programs on the reservation management interface before the playing time. The reserved programs can be displayed in the manner as shown in the preceding table.

When the playing time of the reserved programs meets, namely, 19:00, May 20, 2007, the system detects that the News Broadcast and the Internal News are to be played soon on CCTV-1 and Phoenix Chinese Channel respectively. Therefore, the prompt displaying module 120 displays the following prompt:

| |
|---|
| Please choose one program: |
| **CCTV-1 19:00 May 20, 2007 News Broadcast** |
| Phoenix Chinese Channel 19:00 May 20, 2007 International News |
| Note: Press Up/Down or Left/Right, and then press OK. Press Exit to exit. |

It is noted that, the prompt can be displayed before or when the playing time of the program meets. The time for displaying the prompt before the playing time can be preset, for example, several minutes or seconds before the playing time. This enables subscribers to determine which program is to be played and press the keys.

In addition, the first program is highlighted on the interface by default, and the operation guide is displayed at the bottom of the interface. By pressing the keys, for example, up/down or left/right keys, on the controlling device such as a remote controller, keyboard, or panel compatible with the DTV STB 11 to move the colored cursor, the subscribers can choose a DTV program to be played, and finally determine the DTV program to be played by pressing the Yes/Sure/OK key on the controlling device such as a remote controller, keyboard, or panel.

In conclusion, the method for reserving and playing DTV programs, the STB, and the playing system provided in the embodiments of the present invention enable subscribers to reserve multiple programs to be played at the same time and choose one program for playing before the playing time of the reserved programs. Therefore, subscribers select a program to be played before the playing time, without repeated selection, thus optimizing and perfecting the reservation process. Moreover, this invention enables multiple subscribers to reserve their desired programs to be played at the same time, and before the playing time of reserved programs, the current subscribers can select their desired programs for playing. Therefore, multiple subscribers can reserve programs.

It is understandable for those skilled in the art that all or part of flowcharts in the preceding embodiments can be performed through hardware instructed by programs. The programs may be stored in a computer-readable storage medium. When the program is being performed, the flowcharts of the method provided in the preceding embodiments are also being implemented. The storage medium can be: disks, optical disks, read-only memory (ROM), random access memory (RAM), and so on.

Disclosed above are merely exemplary embodiments of the present invention, but not intended to limit the protection scope of the present invention. Various variations or replacements made by persons skilled in the art without departing from the technical scope of the present invention fall within the protection scope of the present invention as defined by the appended claims.

## Claims

1. A method for reserving and playing digital television (DTV) programs, comprising:
displaying a prompt indicating multiple DTV programs to be played at the same time to a subscriber before or when playing time of reserved DTV programs meets; and
playing one DTV program that is selected by the subscriber from the multiple DTV programs when the time of playing the reserved DTV program meets.

2. The method for reserving and playing DTV programs according to claim 1, wherein before displaying the prompt indicating the multiple DTV programs to be played at the same time to the subscriber, the method further comprises:
checking the number of reserved DTV programs to be played at the same time;
if a result shows that only one DTV program is reserved, playing the DTV program reserved by the subscriber by default when the time of playing the reserved DTV program meets;
if the result shows that more than one DTV program are reserved, displaying a prompt indicating the multiple DTV programs to be played at the same time to the subscriber before or when the time of playing the reserved DTV program meets.

3. The method for reserving and playing DTV programs according to claim 1, further comprising:
displaying a conflict prompt to the subscriber if the number of reserved DTV programs to be played at the same time exceeds a reservation limit.

4. The method for reserving and playing DTV programs according to claim 3, wherein the conflict prompt indicating the reserved DTV programs to be played at the same time is displayed to the subscriber through a program list to enable the subscriber to determine whether to replace a reserved program in the program list.

5. The method for reserving and playing DTV programs according to claim 1, wherein the prompt indicating the multiple DTV programs to be played at the same time is displayed to the subscriber through a program list.

6. A set top box (STB) comprises a program reserving unit, wherein the program reserving unit comprises:
a receiving module, adapted to: receive a request for reserving digital television (DTV) programs from a subscriber;
a prompt displaying module, adapted to: display a prompt indicating one or multiple reserved DTV programs to be played at the same time to the subscriber before or when time of playing the reserved DTV programs received by the receiving module meets; and
a playing module, adapted to: play a DTV program that is selected by the subscriber from the multiple reserved DTV programs according to the prompt displayed by the prompt displaying module when the time of playing the reserved DTV programs meets.

7. The STB according to claim 6, wherein the playing module comprises:
an obtaining submodule, adapted to: obtain information about a DTV program that is selected by the subscriber from the multiple reserved DTV programs by the subscriber; and
a playing submodule, adapted to: play a DTV program according to the information obtained by the obtaining submodule about the DTV program selected by the subscriber from the multiple reserved DTV programs.

8. The STB according to claim 7, wherein the playing module further comprises:
a checking submodule, adapted to: check the number of reserved DTV programs to be played at the same time; if a result shows that only one DTV program is reserved, instruct the playing submodule to directly play the reserved DTV program by default when the time of playing the reserved DTV program meets; if the result shows that more than one DTV programs are reserved, instruct the prompt displaying module to display the prompt indicating the reserved DTV programs to be played at the same time to the subscribers when or before the time of playing the reserved DTV programs meets.

9. The STB according to claim 6, wherein the prompt displaying module displays the prompt indicating the multiple reserved DTV programs to be played at the same time to the subscriber through a program list.

10. The STB according to claim 6, wherein the receiving module comprises:
a reservation request receiving submodule, adapted to: receive the request for reserving the DTV programs from the subscriber;
a conflict checking submodule, adapted to: check whether the number of reserved DTV programs to be played at the same time received by the reservation request receiving submodule exceeds a reservation limit;
a conflict prompt displaying submodule, adapted to: display a conflict prompt to the subscriber if the conflict checking submodule has detected that the number of reserved DTV programs to be played at the same time exceeds the reservation limit; and
a reservation result determining submodule, adapted to: determine the reserved DTV programs to be played at the same time according to subscriber's operations after the conflict checking submodule has detected that the number of reserved DTV programs to be played at the same time does not exceed the reservation limit.

11. A digital television (DTV) playing system, comprising: a DTV set top box (STB), adapted to control playing of DTV programs; and a terminal device connected to the DTV STB, adapted to: play the DTV programs; wherein:
the DTV STB comprises a program reserving unit, and the program reserving unit comprises:
a receiving module, adapted to: receive a request for reserving DTV programs from a subscriber;
a prompt displaying module, adapted to: display a prompt indicating multiple DTV programs to be played at the same time to the subscriber before or when time of playing the reserved DTV programs received by the receiving module meets; and
a playing module, adapted to: play a DTV program that is selected by the subscriber from multiple reserved DTV programs according to a prompt displayed by the prompt displaying module when the time of playing the reserved DTV programs meets.
